(19) **Europäisches Patentamt / European Patent Office / Office européen des brevets**

(11) **EP 4 123 918 A1**

(12) **EUROPEAN PATENT APPLICATION**
published in accordance with Art. 153(4) EPC

(43) Date of publication:
**25.01.2023 Bulletin 2023/04**

(21) Application number: **21770954.2**

(22) Date of filing: **18.03.2021**

(51) International Patent Classification (IPC):
**H04B 7/08** (2006.01)   **H04B 7/0408** (2017.01)
**H04B 7/06** (2006.01)   **H04W 72/04** (2009.01)
**H04W 72/12** (2009.01)

(52) Cooperative Patent Classification (CPC):
**H04B 7/0408; H04B 7/06; H04B 7/08; H04W 72/04;
H04W 72/12;** Y02D 30/70

(86) International application number:
**PCT/KR2021/003333**

(87) International publication number:
**WO 2021/187903 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.03.2020 KR 20200034309**

(71) Applicant: **LG Electronics Inc.
Seoul 07336 (KR)**

(72) Inventors:
• **CHUNG, Jaehoon**
  **Seoul 06772 (KR)**
• **KANG, Jiwon**
  **Seoul 06772 (KR)**
• **GO, Seongwon**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND APPARATUS FOR TRANSMITTING AND RECEIVING SIGNAL ON BASIS OF SPATIAL PARAMETER IN WIRELESS COMMUNICATION SYSTEM**

(57)     A method and an apparatus for transmitting and receiving a signal based on a spatial parameter in a wireless communication system are disclosed. A method of performing downlink reception by a user equipment (UE) in a wireless communication system according to an embodiment of the present disclosure may comprise: receiving, from a base station, at least one of downlink control information (DCI) or configuration information including a first spatial parameter for uplink transmission; and receiving, from the base station, a downlink channel based on a second spatial parameter based on the first spatial parameter, and based on that the downlink channel is a physical downlink control channel (PDCCH), the second spatial parameter based on the first spatial parameter may be applied for at least one specific CORESET among at least one CORESET configured for the UE.

FIG.15

```
START
  |
RECEIVING FIRST SPATIAL PARAMETER
FOR UPLINK TRANSMISSION                    — S1510
  |
PERFORMING DOWNLINK RECEPTION
BASED ON SECOND SPATIAL PARAMETER          — S1520
BASED ON FIRST SPATIAL PARAMETER
  |
END
```

**Description**

[Technical Field]

The present disclosure relates to a wireless communication system, and more particularly, to a method and apparatus for transmitting and receiving a signal based on a spatial parameter in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), Inband Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving a signal based on a spatial parameter.

An additional technical object of the present disclosure is to provide a method and apparatus for transmitting and receiving a downlink channel based on a spatial parameter applied to uplink channel transmission.

An additional technical object of the present disclosure is to provide a method and apparatus for determining a spatial parameter applied to a downlink channel based on a spatial parameter applied to uplink channel transmission.

The technical objects to be achieved by the present disclosure are not limited to the above-described technical objects, and other technical objects which are not described herein will be clearly understood by those skilled in the pertinent art from the following description.

[Technical Solution]

A method of performing downlink reception by a user equipment (UE) in a wireless communication system according to an aspect of the present disclosure may comprise: receiving, from a base station, at least one of downlink control information (DCI) or configuration information including a first spatial parameter for uplink transmission; and receiving, from the base station, a downlink channel based on a second spatial parameter based on the first spatial parameter, and based on that the downlink channel is a physical downlink control channel (PDCCH), the second spatial parameter based on the first spatial parameter is applied for at least one specific CORESET among at least one CORESET configured for the UE.

A method of performing downlink transmission or uplink reception by a base station (BS) in a wireless communication system according to an additional aspect of the present disclosure may comprise: transmitting, to a user equipment (UE), at least one of downlink control information (DCI) or configuration information including a first spatial parameter for uplink transmission; and transmitting, to the UE, a downlink channel based on a second spatial parameter based on the first spatial parameter, and based on that the downlink channel is a physical downlink control channel (PDCCH), the second spatial parameter based on the first spatial parameter is applied for at least one specific CORESET among at least one CORESET configured for the UE.

[Technical Effects]

According to the present disclosure, a method and an apparatus for transmitting and receiving a signal based on a spatial parameter may be provided.

According to the present disclosure, a method and an apparatus for transmitting and receiving a downlink channel based on a spatial parameter applied to uplink channel transmission may be provided.

According to the present disclosure, a method and an apparatus for determining a spatial parameter applied

EP 4 123 918 A1

to a downlink channel based on a spatial parameter applied to uplink channel transmission may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram which illustrates a downlink beam management operation in a wireless communication system to which the present disclosure may be applied.
FIG. 8 is a diagram which illustrates a downlink beam management procedure using SSB in a wireless communication system to which the present disclosure may be applied.
FIG. 9 is a diagram which illustrates a downlink beam management operation using CSI-RS in a wireless communication system to which the present disclosure may be applied.
FIG. 10 is a diagram which illustrates an Rx beam determination process of a terminal in a wireless communication system to which the present disclosure may be applied.
FIG. 11 is a diagram which illustrates a Tx beam determination process of a base station in a wireless communication system to which the present disclosure may be applied.
FIG. 12 is a diagram which illustrates resource allocation in a time and frequency domain related to a downlink beam management operation in a wireless communication system to which the present disclosure may be applied.
FIG. 13 is a diagram which illustrates an uplink beam management operation using SRS in a wireless communication system to which the present disclosure may be applied.
FIG. 14 is a diagram which illustrates an uplink beam management procedure in a wireless communication system to which the present disclosure may be applied.
FIG. 15 is a flowchart illustrating a method of receiving a downlink channel based on spatial parameter for an uplink channel of a terminal according to the present disclosure.
FIG. 16 is a diagram for explaining a signaling process according to an embodiment of the present disclosure.
FIG. 17 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management

CQI: Channel Quality Indicator

CRI: channel state information - reference signal resource indicator

CSI: channel state information

CSI-IM: channel state information - interference measurement

CSI-RS: channel state information - reference signal

DMRS: demodulation reference signal

FDM: frequency division multiplexing

FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

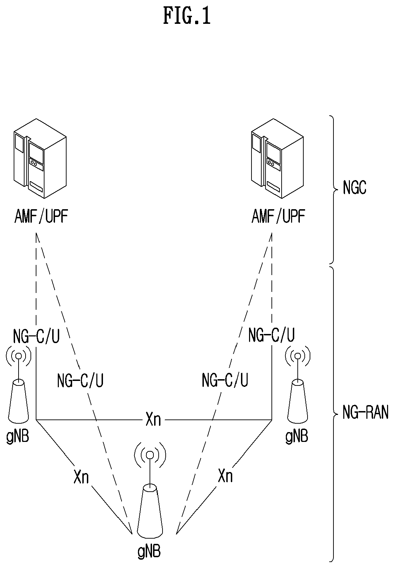

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

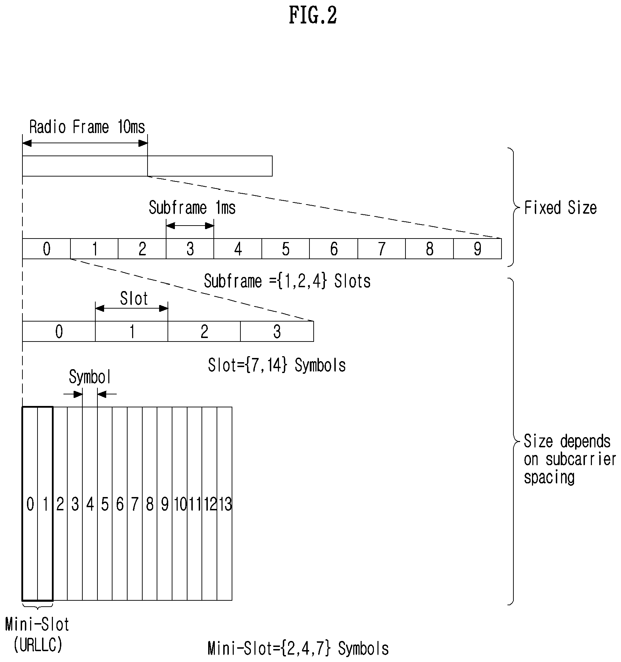

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0, ..., N_{slot}^{fram,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe, P}$ |
|---|---|---|---|
| 0 | 14 | 10 | 1 |
| 1 | 14 | 20 | 2 |
| 2 | 14 | 40 | 4 |

(continued)

| μ | $N_{symb}^{slot}$ | $N_{slot}^{frame,μ}$ | $N_{slot}^{subframe, P}$ |
|---|---|---|---|
| 3 | 14 | 80 | 8 |
| 4 | 14 | 160 | 16 |

[Table 4]

| μ | $N_{symb}^{slot}$ | $N_{slot}^{frame, μ}$ | $N_{slot}^{subframe, μ}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

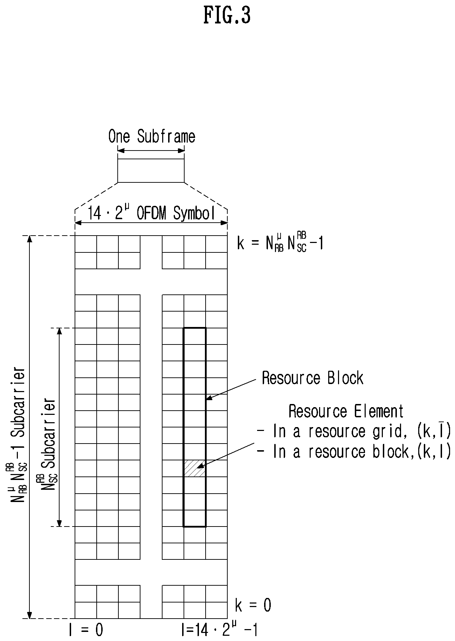

FIG. 3 illustrates a resource grid in a wireless communication system to which the present disclosure may be applied.

In reference to FIG. 3, it is illustratively described that a resource grid is configured with $N_{RB}^{μ}N_{sc}^{RB}$ subcarriers in a frequency domain and one subframe is configured with $14.2^{μ}$ OFDM symbols, but it is not limited thereto. In an NR system, a transmitted signal is described by OFDM symbols of $2^{μ}N_{symb}^{(μ)}$ and one or more resource grids configured with $N_{RB}^{μ}N_{sc}^{RB}$ subcarriers. Here, $N_{RB}^{μ} ≤ N_{RB}^{max,μ}$. The $N_{RB}^{max,μ}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{μ}N_{sc}^{RB}-1$ is an index in a frequency domain and $l'=0,...,2^{μ}N_{symb}^{(μ)}-1$ refers to a position of a symbol in a subframe. When referring to a resource element in a slot, an index pair (k,l) is used. Here, $l=0, ...,N_{symb}^{μ}-1$. A resource element (k,l') for μ and an antenna port p corresponds to a complex value, $a_{k,l'}^{(p,μ)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{μ}$ and a resource element (k,l) for a subcarrier spacing configuration μ in a frequency domain is given as in the following Equation 1.

【Equation 1】

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

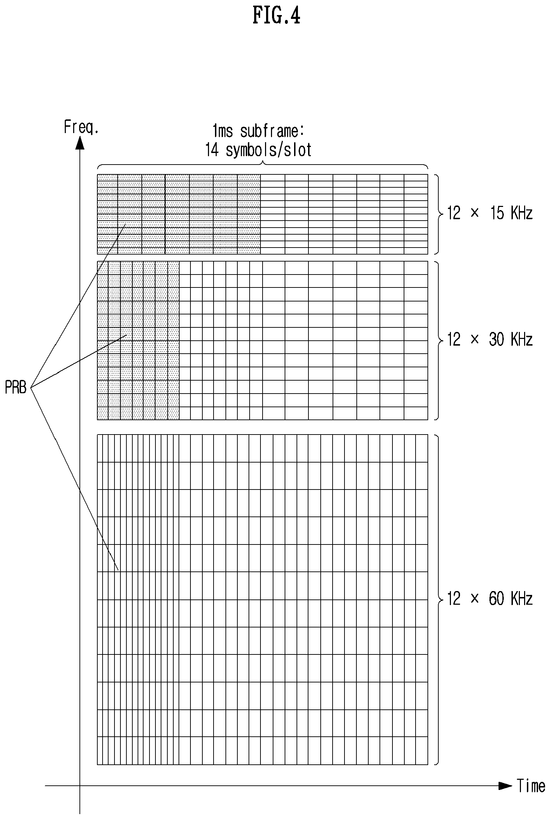

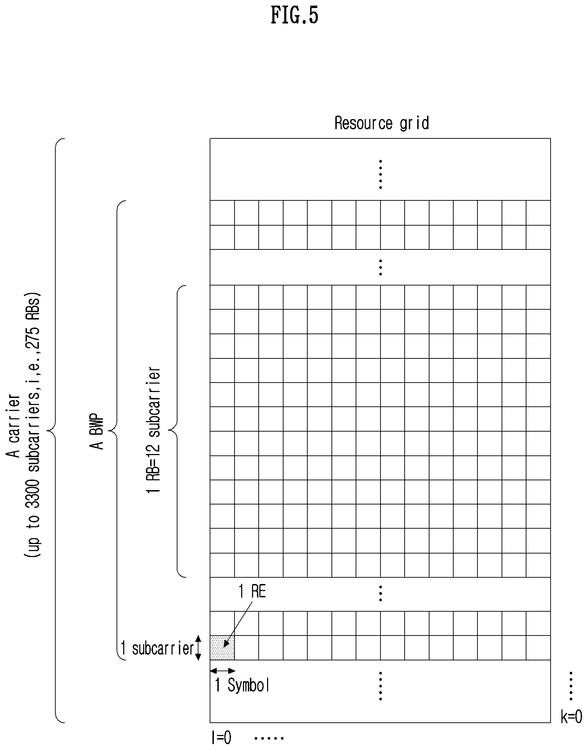

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

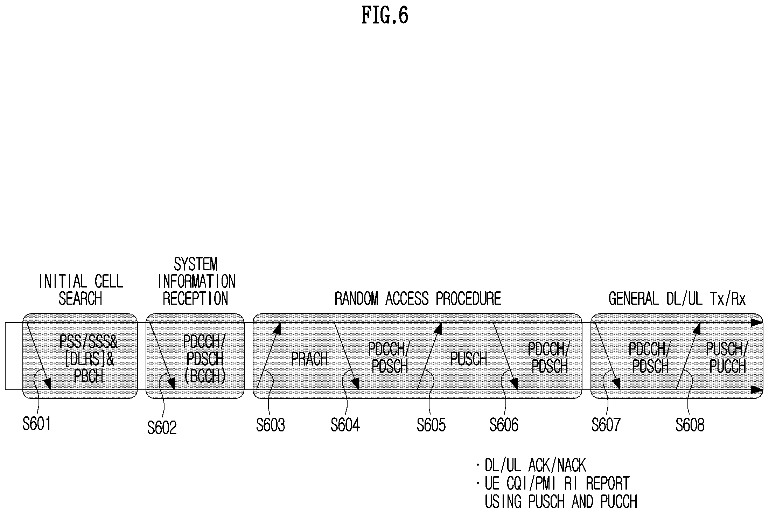

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

Beam measurement: An operation that a base station or a UE measures a property of a received beamformed signal
Beam determination: An operation that a base station or a UE selects its Tx beam / Rx beam
Beam sweeping: An operation that a spatial region is covered by using a Tx and/or Rx beam for a certain time interval in a pre-determined method
Beam report: An operation that a UE reports information of a beamformed signal based on beam measurement
A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier)(s) and corresponding L1-RSRP(Reference Signal Received Power).

The DL RS ID may be a SSBRI(SSB Resource Indicator) or a CRI(CSI-RS Resource Indicator).

Hereinafter, a DL BM procedure using an SSB will be described.

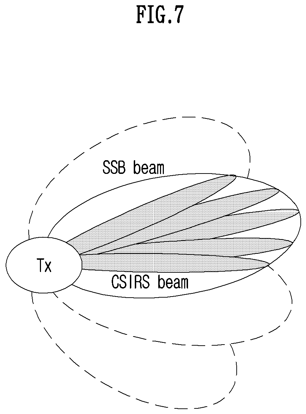

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both of Tx beam sweeping and Rx beam sweeping.

Rx beam sweeping using an SSB may be performed while an UE changes an Rx beam for the same SSBRI across a plurality of SSB bursts. In this case, one SS burst includes one or more SSBs and one SS burst set includes one or more SSB bursts.

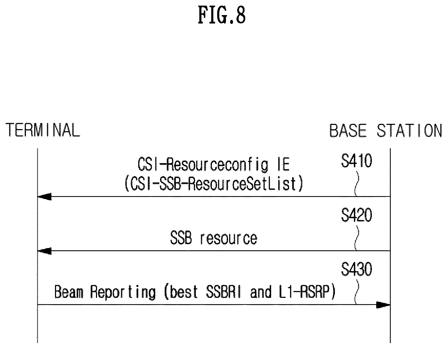

FIG. 8 is a diagram which illustrates a downlink beam management procedure using SSB in a wireless communication system to which the present disclosure may be applied.

A configuration on a beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station (S410).

Table 6 represents an example of CSI-ResourceConfig IE and as in Table 6, a BM configuration using an SSB configures an SSB like a CSI-RS resource without being separately defined.

【Table 6】

```
ASN1START
TAG-CSI-RESOURCECONFIG-START

CSI-ResourceConfig ::=          SEQUENCE {
csi-ResourceConfigId            CSI-ResourceConfigId,
csi-RS-ResourceSetList          CHOICE {
nzp-CSI-RS-SSB                  SEQUENCE {
nzp-CSI-RS-ResourceSetList      SEQUENCE (SIZE
(1..maxNrofNZP-CSI-RS-ResourceSetsPerConfig)) OF NZP-CSI-RS-
ResourceSetId OPTIONAL,
csi-SSB-ResourceSetList         SEQUENCE (SIZE
(1..maxNrofCSI-SSB-ResourceSetsPerConfig)) OF CSI-SSB-
ResourceSetId OPTIONAL
},
csi-IM-ResourceSetList          SEQUENCE (SIZE
(1..maxNrofCSI-IM-ResourceSetsPerConfig)) OF CSI-IM-
ResourceSetId
},

bwp-Id                          BWP-Id,
resourceType                    ENUMERATED { aperiodic,
semiPersistent, periodic },
...
}

TAG-CSI-RESOURCECONFIGTOADDMOD-STOP
-- ASN1STOP
```

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined from 0 to 63. A terminal receives an SSB resource from the base station based on the CSI-SSB-ResourceSetList (S420).

When CSI-RS reportConfig related to a report on a SSBRI and L1-RSRP is configured, the terminal performs (beam) reporting of the best SSBRI and corresponding L1-RSRP to a base station (S430).

Hereinafter, a DL BM procedure using a CSI-RS will be described.

Describing a usage of a CSI-RS, i) a repetition parameter is configured for a specific CSI-RS resource set and when TRS_info is not configured, a CSI-RS is used for beam management. ii) when a repetition parameter is not configured and TRS_info is configured, a CSI-RS is used for a TRS(tracking reference signal). iii) when a repetition parameter is not configured and TRS_info is not configured, a CSI-RS is used for CSI acquisition.

Such a repetition parameter may be configured only for CSI-RS resource sets associated with CSI-ReportConfig having a report of L1 RSRP or 'No Report(or None)'.

If a terminal is configured with CSI-ReportConfig in which reportQuantity is configured as 'cri-RSRP' or 'none' and CSI-ResourceConfig for channel measurement (a higher layer parameter resourcesForChannelMeasurement) does not include a higher layer parameter 'trs-Info' and includes NZP-CSI-RS-ResourceSet in which a higher layer parameter 'repetition' is configured, the terminal may be configured only with a same number of port (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted with the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted in a different OFDM symbol. In addition, a terminal does not expect to receive a different periodicity in periodicityAndOffset in all CSI-RS resources in NZP-CSI-RS-Resourceset.

Meanwhile, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted in the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and corresponding L1-RSRP to a base station.

In addition, when a CSI-RS resource may be configured in the same OFDM symbol(s) as an SSB(SS/PBCH Block) and 'QCL-TypeD' is applicable, the terminal may assume that a CSI-RS and an SSB are quasi co-located with regard to 'QCL-TypeD'.

Here, the QCL TypeD may mean that antenna ports are quasi-colocated with regard to a spatial Rx parameter. When a terminal receives a plurality of DL antenna ports in a QCL Type D relationship, it is allowed to apply the same Rx beam. In addition, a terminal does not expect that a CSI-RS will be configured in a RE overlapped with a RE of an SSB.

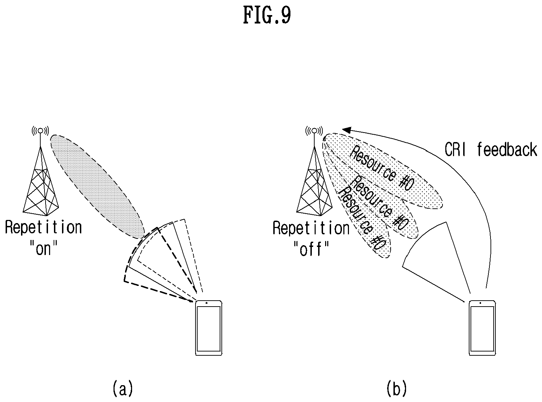

FIG. 9 is a diagram which illustrates a downlink beam management operation using CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case when a repetition parameter is configured as 'ON' and FIG. 9(b) is a case when a repetition parameter is configured as 'OFF'.

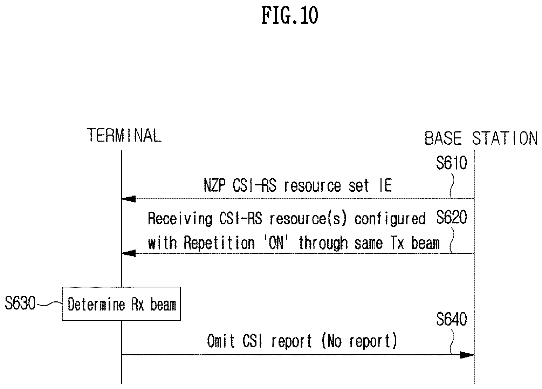

FIG. 10 is a diagram which illustrates an Rx beam determination process of a terminal in a wireless communication system to which the present disclosure may be applied.

In reference to FIG. 9(a) and FIG. 10, an Rx beam determination process of a terminal is described.

A terminal receives NZP CSI-RS resource set IE including a higher layer parameter repetition through RRC signaling from a base station (S610). Here, the repetition parameter is configured as 'ON'.

A terminal repetitively receives resources in a CSI-RS resource set configured as repetition 'ON' through the same Tx beam (or DL spatial domain transmission filter) of a base station in a different OFDM symbol (S620).

A terminal determines its Rx beam (S630).

A terminal omits a CSI report (S640). In this case, reportQuantity of a CSI report configuration may be configured as 'No report (or None)'.

In other words, the terminal may omit a CSI report when it is configured as repetition 'ON'.

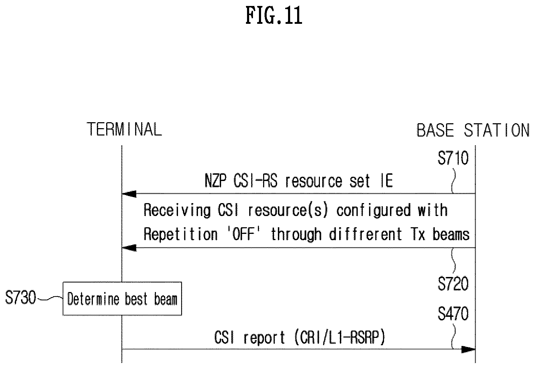

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives NZP CSI-RS resource set IE including a higher layer parameter repetition through RRC signaling from a base station (S710). Here, the repetition parameter is configured as 'OFF' and it is related to a Tx beam sweeping procedure of a base station.

A terminal receives resources in a CSI-RS resource set configured as repetition 'OFF' through a different Tx beam (or DL spatial domain transmission filter) of a base station (S720).

A terminal selects (or determines) the best beam (S740).

A terminal reports an ID and related quality information (e.g., L1-RSRP) of a selected beam to a base station (S740). In this case, reportQuantity of a CSI report configuration may be configured as 'CRI + L1-RSRP'.

In other words, when a CSI-RS is transmitted for BM, the terminal reports a CRI and a related L1-RSRP.

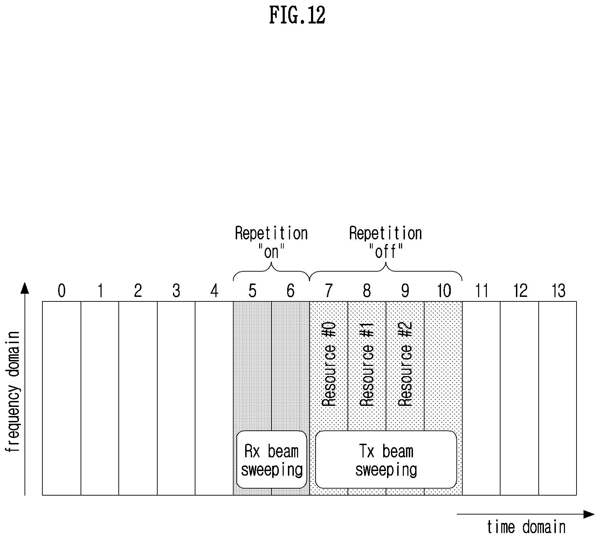

FIG. 12 is a diagram which illustrates resource allocation in a time and frequency domain related to a downlink beam management operation in a wireless communication system to which the present disclosure may be applied.

In reference to FIG. 12, it is shown that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted in a different Tx beam.

Hereinafter, a beam indication method related to downlink BM will be described.

A terminal may be configured by RRC with a list of a maximum M candidate transmission configuration indication (TCI) states at least for a purpose of a QCL(Quasi Co-location) indication. Here, M may be 64.

Each TCI state may be configured as one RS set. Each ID of a DL RS at least for a spatial QCL purpose (QCL Type D) in a RS set may refer to one of DL RS types such as an SSB, a P(periodic)-CSI RS, an SP(semi-persistent)-CSI RS, an A(aperiodic)-CSI RS, etc.

An ID of DL RS(s) in a RS set used at least for a purpose of a spatial QCL may be initialized/updated at least by explicit signaling.

Table 7 illustrates a TCI-State information element (IE).

A TCI-State IE is associated with a quasi co-location (QCL) type corresponding to one or two DL reference

signals (RS).

【Table 7】

```
ASN1START
TAG-TCI-STATE-START

TCI-State ::=                    SEQUENCE {
tci-StateId                     TCI-StateId,
qcl-Type1                     QCL-Info,
qcl-Type2                     QCL-Info
                     OPTIONAL,  -- Need R

...
}

QCL-Info ::=                    SEQUENCE {
cell                            ServCellIndex
                     OPTIONAL,  -- Need R
bwp-Id                          BWP-Id
                     OPTIONAL,  -- Cond CSI-RS-Indicated
referenceSignal                 CHOICE {
csi-rs                          NZP-CSI-RS-ResourceId,
ssb                             SSB-Index
},
qcl-Type                        ENUMERATED {typeA, typeB, typeC,
typeD},
...
}

TAG-TCI-STATE-STOP
-- ASN1STOP
```

In Table 7, a bwp-Id parameter represents a DL BWP(bandwidth part) where an RS is located, a cell parameter represents a carrier where a RS is located and a referencesignal parameter represents reference antenna port(s) which is a source of a quasi co-location for corresponding target antenna port(s) or a reference signal including it. The target antenna port(s) may be a CSI-RS, a PDCCH DMRS, or a PDSCH DMRS. In an example, a corresponding TCI state ID(identifier) may be indicated in NZP CSI-RS resource configuration information to indicate QCL reference RS information for a NZP(non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s).

Hereinafter, uplink beam management will be described.

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

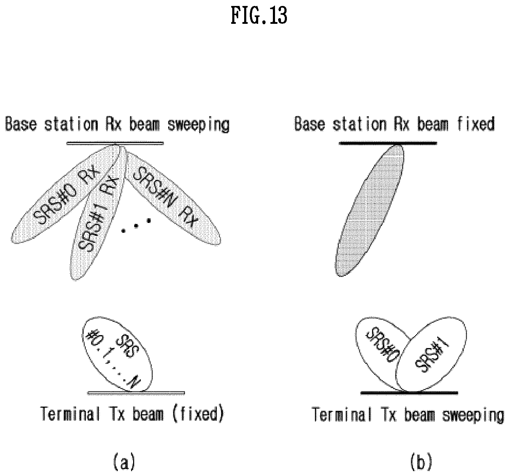

FIG. 13 is a diagram which illustrates an uplink beam management operation using SRS in a wireless communication system to which the present disclosure may be applied.

FIG. 13(a) illustrates a Rx beam determination operation of a base station and FIG. 13(b) illustrates a Tx beam sweeping operation of a terminal.

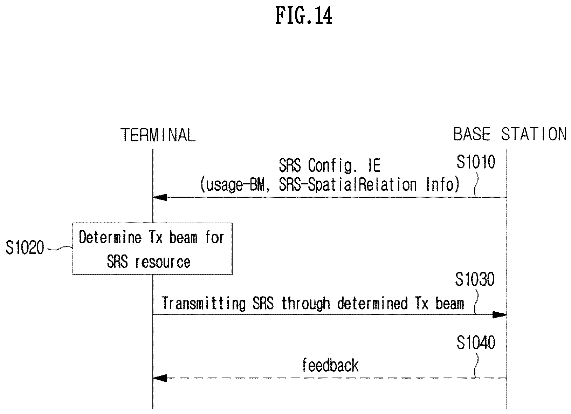

FIG. 14 is a diagram which illustrates an uplink beam management procedure in a wireless communication system to which the present disclosure may be applied.

A terminal receives RRC signaling (e.g., an SRS-Config IE) including a (higher layer parameter) usage parameter configured as 'beam management' from a base station (S1010).

Table 8 represents an example of an SRS-Config IE(Information Element) and an SRS-Config IE is used for SRS transmission configuration. An SRS-Config IE includes a list of SRS-Resources and a list of SRS-ResourceSets. Each SRS resource set means a set of SRS-resources.

A network may trigger transmission of an SRS resource set by using configured aperiodicSRS-ResourceTrigger (L1 DCI).

【Table 8】

```
ASN1START
TAG-MAC-CELL-GROUP-CONFIG-START

SRS-Config ::=                    SEQUENCE {
srs-ResourceSetToReleaseList        SEQUENCE
(SIZE(1..maxNrofSRS-ResourceSets)) OF SRS-ResourceSetId
    OPTIONAL,  -- Need N
srs-ResourceSetToAddModList         SEQUENCE
(SIZE(1..maxNrofSRS-ResourceSets)) OF SRS-ResourceSet
    OPTIONAL,  -- Need N

srs-ResourceToReleaseList           SEQUENCE
(SIZE(1..maxNrofSRS-Resources)) OF SRS-ResourceId
    OPTIONAL,  -- Need N
srs-ResourceToAddModList            SEQUENCE
(SIZE(1..maxNrofSRS-Resources)) OF SRS-Resource
    OPTIONAL,  -- Need N

tpc-Accumulation                    ENUMERATED {disabled}
                                    OPTIONAL,  -- Need S
...
}

SRS-ResourceSet ::=               SEQUENCE {
srs-ResourceSetId                 SRS-ResourceSetId,
srs-ResourceIdList                SEQUENCE
(SIZE(1..maxNrofSRS-ResourcesPerSet)) OF SRS-ResourceId
```

```
   OPTIONAL,  -- Cond Setup

resourceType                    CHOICE {
aperiodic                       SEQUENCE {
aperiodicSRS-ResourceTrigger        INTEGER (1..maxNrofSRS-
TriggerStates-1),
csi-RS                          NZP-CSI-RS-ResourceId
                    OPTIONAL,  -- Cond NonCodebook
slotOffset                      INTEGER (1..32)
                    OPTIONAL,  -- Need S
...
},
semi-persistent                 SEQUENCE {
associatedCSI-RS                NZP-CSI-RS-ResourceId
                    OPTIONAL, -- Cond NonCodebook
...
},
periodic                        SEQUENCE {
associatedCSI-RS                NZP-CSI-RS-ResourceId
                    OPTIONAL, -- Cond NonCodebook
...
}
},
usage                           ENUMERATED {beamManagement,
codebook, nonCodebook, antennaSwitching},
alpha                           Alpha
                    OPTIONAL, -- Need S
p0                              INTEGER (-202..24)
                        OPTIONAL, -- Cond Setup
pathlossReferenceRS             CHOICE {
ssb-Index                       SSB-Index,
csi-RS-Index                    NZP-CSI-RS-ResourceId


SRS-SpatialRelationInfo ::=     SEQUENCE {
servingCellId                   ServCellIndex
        OPTIONAL,  -- Need S
referenceSignal                 CHOICE {
ssb-Index                       SSB-Index,
csi-RS-Index                    NZP-CSI-RS-ResourceId,
srs                             SEQUENCE {
resourceId                      SRS-ResourceId,
uplinkBWP                       BWP-Id
}
}
}


SRS-ResourceId ::=                                      INTEGER
(0..maxNrofSRS-Resources-1)
```

In Table 8, usage represents a higher layer parameter which indicates whether an SRS resource set is used for beam management or is used for codebook-based or non-codebook-based transmission. A usage parameter corresponds to a L1 parameter 'SRS-SetUse'. 'spatialRelationInfo' is a parameter which represents a configuration of a spatial relation between a reference RS and a target SRS. Here, a reference RS may be a SSB, a CSI-RS or a SRS corresponding to a L1 parameter 'SRS-SpatialRelationInfo'. The usage is configured per SRS resource set. A terminal determines a Tx beam for an SRS resource which will be transmitted based on SRS-SpatialRelation Info included in the SRS-Config IE (S1020). Here, SRS-SpatialRelation Info is configured per SRS resource and represents whether the same beam as a beam used in a SSB, a CSI-RS or a SRS will be applied per SRS resource. In addition, SRS-SpatialRelationInfo may be configured or may not be configured for each SRS resource.

If SRS-SpatialRelationInfo is configured for an SRS resource, the same beam as a beam used in a SSB, a CSI-RS or a SRS is applied and transmitted. But, if SRS-SpatialRelationInfo is not configured for an SRS resource, the terminal randomly determines a Tx beam and transmits an SRS through the determined Tx beam (S1030).

In more detail, for a P-SRS that 'SRS-ResourceConfigType' is configured as 'periodic':

i) when SRS-SpatialRelationInfo is configured as 'SSB/PBCH', a UE transmits a corresponding SRS resource by applying the same spatial domain transmission filter (or generated by a corresponding filter) as a spatial domain Rx filter used for SSB/PBCH reception; or

ii) when SRS-SpatialRelationInfo is configured as 'CSI-RS', a UE transmits a SRS resource by applying the same spatial domain transmission filter used for periodic CSI-RS or SP(semi-persistent) CSI-RS reception; or

iii) when SRS-SpatialRelationInfo is configured as 'SRS', a UE transmits a corresponding SRS resource by applying the same spatial domain transmission filter used for periodic SRS transmission.

Although 'SRS-ResourceConfigType' is configured as 'SP(semi-persistent)-SRS' or 'AP(aperiodic)-SRS', a beam determination and transmission operation may be applied in a way similar to the above.

Additionally, a terminal may receive or may not receive a feedback on an SRS from a base station as in the following three cases (S1040).

i) when Spatial_Relation_Info is configured for all SRS resources in a SRS resource set, a terminal transmits an SRS with a beam indicated by a base station. For example, when Spatial_Relation_Info indicates all the same SSB, CRI or SRI, a terminal repetitively transmits an SRS with the same beam. This case corresponds to FIG. 13(a) as a usage for a base station to select an Rx beam.

ii) Spatial_Relation_Info may not be configured for all SRS resources in an SRS resource set. In this case, a terminal may transmit with freely changing SRS beams. In other words, this case corresponds to FIG. 13(b) as a usage for a terminal to sweep Tx beams.

iii) Spatial_Relation_Info may be configured only for a part of SRS resources in an SRS resource set. In this case, for a configured SRS resource, an SRS may be transmitted with an indicated beam, and for a SRS resource that Spatial_Relation_Info is not configured an SRS may be transmitted by randomly applying a Tx beam by a terminal.

CSI-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling. The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS - ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesForInterference) is used for interference measurement performed in CSI-IM.

CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.

In addition, when interference measurement is performed in an NZP CSI-RS, UE does not expect to be configured with one or more NZP CSI-RS resources in an associated resource set in a resource setting for channel measurement.

A terminal configured with a higher layer parameter nzp-CSI-RS-ResourcesForInterference does not expect that 18 or more NZP CSI-RS ports will be configured in a NZP CSI-RS resource set.

For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.

- A different interference signal in RE(s) of an NZP CSI-RS resource for channel measurement, an NZP CSI-RS resource for interference measurement or a CSI-IM resource for interference measurement

CSI Report

For a CSI report, a time and frequency resource which may be used by UE are controlled by a base station.

CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.

For CQI, PMI, CRI, SSBRI, LI, RI, L1-RSRP, a terminal is configured by a higher layer with $N \geq 1$ CSI-ReportConfig reporting setting, $M \geq 1$ CSI-ResourceConfig resource setting and a list of one or two trigger states (provided by aperiodicTriggerStateList and semiPersistentOnPUSCH-TriggerStateList). Each trigger state in the aperiodicTriggerStateList includes a associated CSI-ReportConfigs list which indicates a channel and optional resource set IDs for interference. In semiPersistentOnPUSCH-TriggerStateList, one associated CSI-ReportConfig is included in each trigger state.

In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.

ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subframe,\mu}+1$. After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a 'Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

For a periodic CSI-RS resource of configured NZP-CSI-RS-ResourceSet including a higher layer parameter trs-Info, UE may expect a TCI state to indicate one of the following QCL type(s).

- QCL-TypeC with a SS/PBCH block, and if applicable, QCL-TypeD with the same SS/PBCH block, or
- QCL-TypeC with a SS/PBCH block, and if applicable, QCL-TypeD with a CSI-RS resource in configured NZP-CSI-RS-ResourceSet including a higher layer parameter repetition

For an aperiodic CSI-RS resource of configured NZP-CSI-RS-ResourceSet including a higher layer parameter trs-Info, UE may expect a TCI state to indicate QCL-TypeA with a periodic CSI-RS resource of NZP-CSI-RS-ResourceSet including a higher layer parameter trs-Info, and if applicable, QCL-TypeD with the same periodic CSI-RS resource.

For a CSI-RS resource of NZP-CSI-RS-ResourceSet configured without a higher layer parameter trs-Info and without a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a SS/PBCH block, or

  QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
  when QCL-TypeD is not applicable, QCL-TypeB with a CSI-RS resource in configured NZP-CSI-RS-ResourceSet including a higher layer parameter trs-Info.

For a CSI-RS resource of configured NZP-CSI-RS-ResourceSet including a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or

  QCL-TypeC with a SS/PBCH block, and if applicable, QCL-TypeD with the same SS/PBCH block.

For a DMRS of a PDCCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or

  QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
  QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

For a DMRS of a PDSCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or

- QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

Transmission and Reception of downlink based on an uplink channel spatial parameter

Hereinafter, various examples of the present disclosure for transmitting and receiving a downlink channel based on a spatial parameter for an uplink channel will be described.

A spatial parameter (or a parameter related to beam transmission/reception) related to downlink transmission/reception may include QCL information applied to a physical channel through which downlink control information or data is transmitted and received or assumed by the terminal. The QCL information may include QCL reference signal (RS) information, and the QCL RS information may be configured for each QCL type (e.g., QCL type A/B/C/D). For example, downlink control information (DCI) may be transmitted and received through PDCCH, and a spatial parameter related to DCI transmission/reception may include QCL reference information for PDCCH DMRS antenna port(s), TCI state information, etc. In addition, downlink data may be transmitted and received through PDSCH, and a spatial parameter related to downlink data transmission/reception may include QCL reference information for PDSCH DMRS antenna port(s), TCI state information, etc.

However, in the present disclosure, the term spatial parameter is not limited to QCL information and may include a spatial parameter applied to uplink transmission (e.g., spatial relation info related to an uplink transmission beam). For example, uplink control information (UCI) may be transmitted/received through PUCCH and/or PUSCH, and a spatial parameter related to UCI transmission/reception may include PRI (resource indicator) and spatial relation info related to PUCCH/PUSCH transmission/reception, or QCL reference RS related to thereof, etc.

In addition, a spatial parameter may be separately set for downlink or uplink, or may be configured integrally for downlink and uplink.

In addition, a spatial parameter may also be defined or configured as a spatial parameter set including at least one spatial parameter. Hereinafter, in order to simplify the description, at least one spatial parameter is collectively referred to as a spatial parameter.

In the following examples, a method of efficiently determining a spatial parameter to be applied to a downlink channel transmission/reception based on a spatial parameter for the uplink channel will be described.

In order for the base station to configure/indicate the PDCCH reception spatial parameter (or reception beam) of the terminal, it may configure/update the TCI state ID for each of one or more CORESETs. The TCI state configured for CORESET may indicate QCL reference information (e.g., QCL type D related information) for PDCCH DMRS antenna port(s) transmitted through the corresponding CORESET. That is, QCL reference information (e.g., QCL Type D information) of the TCI state ID configured/updated for each CORESET may correspond to the PDCCH reception beam of the terminal.

In the case of a spatial parameter (or reception beam) configuration/indication for PDSCH reception, a TCI field may be included in the PDCCH DCI for scheduling the corresponding PDSCH. The TCI status ID (or TCI codepoint) indicated by the TCI field in DCI may indicate QCL reference information (e.g., QCL type D related information) for the PDSCH DMRS antenna port(s).

Configuring/indicating a spatial parameter for PDSCH reception may be dynamically performed through DCI, since the spatial parameter indicated through DCI is limited to spatial parameter candidates which are preconfigured through higher layer signaling (e.g., RRC/MAC CE), higher layer signaling is required to change/update a spatial parameter for PDSCH reception. Since a spatial parameter for PDCCH reception is based on CORESET configuration, RRC reconfiguration or MAC CE message transmission for CORESET configuration/update is required to configure/indicate the spatial parameter for PDCCH reception. In addition, when spatial parameter information (e.g., TCI field) is not included in the DCI for scheduling the PDSCH, the spatial parameter for PDSCH reception may be applied based on the spatial parameter configured for the CORESET in which the DCI is monitored. In addition, even if spatial parameter information (e.g., TCI field) is included in the DCI for scheduling the PDSCH, when a time interval (or scheduling offset) between a timing at which a DCI/PDCCH scheduling a PDSCH is received and a timing at which the corresponding PDSCH is received is less than or equal to a predetermined threshold, the spatial parameter for PDSCH reception may be applied based on the default spatial parameter (e.g., the TCI state associated with the CORESET or SS set having the lowest identifier in the latest slot monitored by the terminal). In this way, if the change/update of the PDCCH/PDSCH spatial parameter/receive beam is performed through higher layer signaling (e.g., RRC/MAC CE), there is a disadvantage in that not only flexibility is reduced but also unnecessary signaling overhead according to the change/update exists.

In order to solve this problem, in the following examples, while minimizing the signaling overhead, based on the spatial parameter configured/indicated for the uplink channel, methods for dynamically configuring/indicating or changing/updating a spatial parameter for downlink channel reception/transmission.

More specifically, in the present disclosure, by utilizing spatial relation info that is information about a reference RS to be applied to a spatial parameter/transmission beam to be used for uplink channel transmission, various examples for increasing the association flexibility for determining a spatial parameter/receiving beam to be used for reception along with the TCI state will be described. In addition, based on the PUCCH/PUSCH spatial parameter/transmission beam indicated through DCI, when determining a spatial parameter/receive beam to be applied to a downlink channel, the PDCCH/PDSCH reception beam may be dynamically indicated/determined/changed/updated.

In the following description, spatial parameter or spatial relation info may mean including RS information/QCL related (or reference) RS information/QCL parameters, or the like for spatial related assumption for data/signal transmitted/received through UL channel/DL channel, or may be expressed by being mixed/replaced by the above terms.

In the following examples, the meaning of using/applying/mapping a specific spatial parameter (or TCI state or TCI) when transmitting/receiving data/DCI/UCI for a certain frequency/time/spatial resource is that in the case of DL estimating a channel from DMRS using the QCL type and QCL RS indicated by the corresponding spatial parameter in corresponding frequency/time/spatial resources and receiving/demodulating data/DCI (e.g., PDSCH/PDCCH) with the estimated channel and in the case of UL transmitting/modulating DMRS and data/UCI (e.g., PUSCH/PUCCH) using transmission beam and/or transmission power indicated by the corresponding spatial parameter in corresponding frequency/time/spatial resources.

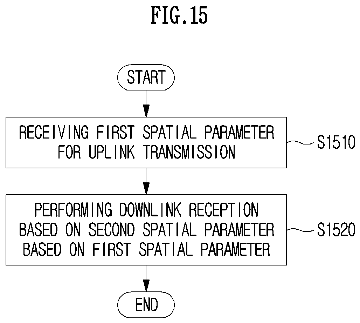

FIG. 15 is a flowchart illustrating a method of receiving a downlink channel based on spatial parameter for an uplink channel of a terminal according to the present disclosure.

In step S1510, the terminal may receive, from the base station, information on a first spatial parameter for uplink transmission.

Although not illustrated in FIG. 15, before step S1510, the terminal may report, to the base station, information on whether to assume/apply a spatial parameter for downlink reception based on the first spatial parameter for uplink transmission (e.g., UE capability information).

Although not illustrated in FIG. 15, after step S1510, the terminal may assume/apply a spatial parameter related to an uplink channel (e.g., PUCCH and/or PUSCH) based on the first spatial parameter for uplink transmission.

The terminal may determine a second spatial parameter related to a downlink channel (e.g., PDCCH and/or PDSCH) based on the first spatial parameter for uplink transmission received in step S1510.

For example, the first spatial parameter may include QCL RS information related to spatial relation info for PUCCH/PUSCH. Based on the QCL RS information related to the first spatial parameter, the terminal may determine a spatial parameter of a CORESET associated with a downlink channel (e.g., a TCI state and/or QCL RS information associated with the TCI state).

In this regard, based on the first parameter for the uplink transmission of the terminal, the base station may provide information indicating whether to enable and/or activate the operation of determining the second spatial parameter for downlink channel reception to the terminal. For example, whether to enable or not may be configured to the terminal through higher layer (e.g., RRC/MAC CE) signaling, and if enabled, the lower layer (e.g., DCI) signaling through the whether to activate may be indicated to the terminal.

In addition, the first spatial parameter may be configured/indicated/determined for each contents type (e.g., UCI (SR, ACK/NACK, CSI, etc.) type) transmitted through an uplink channel (e.g., PUCCH/PUSCH), and the second spatial parameter for downlink reception may be determined/applied/assumed based on the corresponding first spatial parameter.

In addition, the second spatial parameter for downlink reception determined based on the first spatial parameter for uplink transmission may be assumed/applied for a specific CORESET (e.g., CORESET in which DCI monitored, entire CORESET except CORESET 0). The second spatial parameter for downlink reception determined based on the first spatial parameter for uplink transmission may be assumed/applied to reception of a PDSCH scheduled by DCI that does not include a TCI field.

In step S1520, the terminal may perform downlink reception based on the second spatial parameter based on the first spatial parameter. The downlink reception may include performing downlink channel (e.g., PDCCH/PDSCH) reception based on the QCL RS associated with the second spatial parameter.

In the above example, configuring/indicating/assuming the second spatial parameter for downlink reception based on the first spatial parameter for uplink transmission may be extended to configuring/indicating/assuming the first spatial parameter for uplink transmission based on the second spatial parameter for downlink reception, conversely. That is, the first spatial parameter for uplink transmission and the second spatial parameter for downlink reception may be integrated and configured/indicated/assumed. In addition, based on linkage information between the first spatial parameter for uplink transmission and the second spatial parameter for downlink reception, the other may be configured/indicated/assumed based on any one of the first spatial parameter and the second spatial parameter.

Hereinafter, various examples of configuring/indicating/determining/assuming/applying the second spatial parameter for downlink reception based on the first spatial parameter for uplink transmission will be described.

Embodiment 1

This embodiment relates to a method of assuming/changing/updating a second spatial parameter for a downlink channel based on a first spatial parameter for the uplink channel.

For example, the terminal may assume/change/update the RS designated as the first spatial parameter (e.g., spatial relation info) of the uplink channel (e.g., PUCCH/PUSCH) to the second spatial parameter for reception of the PDCCH (e.g., QCL (Type D) RS).

As a more specific example, it is possible to configure/indicate/apply a reception beam for a PDCCH for a PUSCH scheduling (i.e., a DCI scheduling a PDSCH is transmitted) based on a QCL reference RS (e.g., CSI-RS, SSB, SRS) corresponding to spatial relation info of an uplink channel (e.g., PUCCH or PUSCH). By aligning and using the PDCCH reception beam to the spatial relation info of the resource for the corresponding uplink channel, the terminal may automatically change/assume the reception beam direction for the DL control channel based on the beam direction in which UL transmission is performed. Accordingly, a separate procedure or signaling for changing the DL reception beam initially configured through RRC may be omitted. That is, DL reception beam change/update may be performed without separately performing RRC reconfiguration and/or MAC CE message reception for CORESET configuration update.

In order to prevent from collide with the existing DL beam configuration/update operation, an operation of configuring/updating the second spatial parameter for the downlink based on the first spatial parameter for the uplink may be applied when the TCI state is not configured for the CORESET in which the PDCCH is monitored.

In addition, whether to enable and/or to activate configuration/update of the second spatial parameter for downlink based on the first spatial parameter for uplink may be explicitly configured/indicated through a predetermined indicator.

For example, a higher layer parameter (e.g., 'PDCCH_ULbeam_enabler') for whether to configure the second spatial parameter based on the first spatial parameter may be configured in RRC configuration. The names of a parameter for enable is merely exemplary, and do not limit the scope of the present disclosure.

If the corresponding enabler is 'OFF', an existing reception beam configuration method (e.g., a TCI state-based method of CORESET in which PDCCH/DCI is monitored, or a default TCI state-based method) may be applied. When the corresponding enabler is 'ON', configuration/update of the second spatial parameter based on the first spatial parameter may be applied, examples described below may be activated, or whether the examples described below are activated may be additionally indicated.


Embodiment 1-1

This embodiment relates to a method of assuming/changing RS designated as spatial relation info of PUCCH to QCL TypeD RS for PDCCH reception.

PUCCH may carry one or more of various types of UCI (e.g., scheduling request (SR), HARQ ACK/NACK (Acknowledgement/Non-Acknowledgement), CSI (channel state information), etc.).

In this case, in determining the QCL TypeD RS for PDCCH reception based on the reference RS designated as spatial relation info of the PUCCH resource, a specific operation may be defined according to the usage of the PUCCH or the PUCCH contents (e.g., the UCI type included in the PUCCH).

Case 1) For example, for the SR PUCCH, based on the reference RS designated as spatial relation info of information indicating the SR PUCCH resource (e.g., PRI), QCL TypeD RS for reception of PDCCH for scheduling PUSCH may be assumed/changed.

Case 2) As an additional example, for ACK/NACK PUCCH, based on the RS designated as the spatial relation info of the PUCCH resource corresponding to the PRI field in the downlink scheduling DCI (e.g., DCI format 1_1), QCL TypeD RS for downlink scheduling PDCCH reception may be assumed/changed.

Case 3) As an additional example, for CSI PUCCH, based on the RS designated as spatial relation info of PUCCH for periodic and/or semi-persistent CSI reporting, QCL TypeD RS for PDCCH reception may be assumed/changed.

In case 1, SR means that the terminal requests a UL grant (e.g., DCI format 0 series) for PUSCH transmission from the base station. At this time, for SR transmission, the terminal may use SR PUCCH (e.g., PUCCH format 0 or PUCCH format 1), and the corresponding PUCCH resource may be configured by a predetermined parameter (e.g., PUCCH-ResourceID, PRI) in a predetermined information element (IE) configured for RRC (e.g., SchedulingRequest-ResourceConfig). Accordingly, by configuring/updating the transmission beam corresponding to the spatial relation info of the corresponding PRI to be aligned with the PDCCH reception beam, association flexibility with respect to the PDCCH reception beam can be improved.

For example, when the above-described 'PDCCH_ULbeam_enabler' is 'ON', depending on whether activated by an activation indicator in the DCI field of the received PDCCH (e.g., an indicator indicating whether operation according to case 1 is supported), whether to apply the second spatial parameter for PDCCH reception based on the first spatial parameter for SR PUCCH transmission may be indicated. For example, the activation indicator may be defined as a 1-bit indicator (e.g., 'PDCCH_SR_linkage'). The names of the indicators for activation are illustrative only, and do not limit the scope of the present disclosure.

In case 2, for the ACK/NACK PUCCH indicating whether PDSCH decoding is successful or not, ACK/NACK PUCCH transmission beam may be indicated by the PRI field (e.g., 3-bit field) in the DCI (e.g., DCI format 1_1) scheduling the PDSCH. It is possible to configure/update the PDCCH reception beam based on a beam corresponding to spatial relation info of the PRI for the corresponding ACK/NACK PUCCH.

Such an operation may be configured for CORESET in which the terminal monitors the PDCCH. In addition, when the PUCCH transmission beam and the PDCCH reception beam are configured to be aligned, the PUCCH transmission beam may be configured/indicated/assumed based on the PDCCH reception beam. For example, the terminal may receive PDSCH scheduling/PDCCH in one or more configured CORESET(s), and the DCI of the corresponding PDCCH may include an indicator for alignment of a transmission beam for ACK/NACK PUCCH and a PDCCH reception beam. When the indicator is activated, the terminal may determine the PDCCH reception beam based on the PRI for the PUCCH resource or may determine PUCCH transmission beam based on the PDCCH reception beam (e.g., the TCI state configured for each of the one or more configured CORESETs). In the latter case, since the PRI field (e.g., a 3-bit field) may not be included in the DCI, the effect of saving the size of the DCI payload may be obtained.

In the case of ACK/NACK bundling indicating whether decoding is successful for a plurality of downlink receptions, at least one spatial relation info or at least one reference RS may be configured/indicated in relation to a PUCCH resource. In this case, based on a reference RS designated as one spatial relation info by a specific rule or a reference RS designated as spatial relation info configured/indicated by a base station among the at least one spatial relation info (or the at least one reference RS), QCL TypeD RSfor PDCCH reception may be assumed/changed.

When a plurality of ACK/NACKs for a plurality of PDSCHs are bundled and transmitted through a specific PUCCH resource, the terminal may select one spatial relation info according to a specific rule for a plurality of ACK/NACKs promised with the base station. For example, the one spatial relation info may be selected according to criteria such as corresponding to the lowest or highest identifier or index, or corresponding to ACK/NACK for the first or last PDSCH. Alternatively, whether the base station determines/indicates the PDCCH reception beam may be directly indicated based on which one of spatial relation info for a plurality of ACK/NACKs.

In case 3, based on the spatial parameter for the PUCCH transmission for periodic/semi-static (P/SP) CSI reporting, the spatial parameter for the PDCCH may be configured/updated.

In the case of periodic CSI PUCCH transmitted periodically, the PDCCH beam may be determined based on the beam corresponding to the spatial relation info of the most recently transmitted PUCCH resource according to whether the operation of case 3 configured to RRC is applied. For example, if the RS designated as the TCI state in the CORESET configuration is the same as the ID of the NZP CSI-RS used for CSI measurement, the corresponding CORESET beam configuration may be changed/updated based on the PUCCH transmission beam, or at least one resource within a resource set for CSI measurement may be configured as a reference RS of a TCI state for one or more CORESETs, and a reception beam for a PDCCH monitored by the corresponding CORESET may be configured to be changed/updated.

In addition, for MTRP, change/update of the second spatial parameter for downlink reception may be indicated based on the first spatial parameter for uplink transmission in units of CORESET groups. Here, the TRP may be applied by being replaced with an expression of a panel, a cell, a transmission point (TP), a base station (gNB, etc.). In addition, the TRP may be classified according to information (e.g., index) for the CORESET group (or CORESET pool). As an example, when one terminal is configured to perform transmission/reception with a plurality of TRPs (or cells), this may mean that a plurality of CORESET groups (or CORESET pools) are configured for one terminal. The configuration of such a CORESET group (or CORESET pool) may be performed through higher layer signaling (e.g., RRC signaling, etc.). In addition, when a plurality of CORESET groups are configured for one terminal, the corresponding terminal may be configured or defined to receive data using a multi-DCI-based M-TRP operation.

In the case of SP CSI reporting, the operation described for periodic CSI reporting may be applied until it is deactivated after being activated as MAC CE.

Here, it is not only that QCL (Type D) RS for PDCCH reception may be changed/assumed based on RS designated as spatial relation info of the P/SP CSI PUCCH transmission beam, but also that QCL (Type D) RS for PDSCH reception scheduled by the corresponding PDCCH may be changed/assumed based on RS for the PUCCH transmission beam. In this case, since the TCI field in the DCI for scheduling the PDSCH may be omitted, the effect of saving the DCI payload size may be obtained.

According to the above-described examples, based on a first spatial parameter (e.g., a transmission beam corresponding to spatial relation info) of a PUCCH resource according to a PUCCH usage or PUCCH contents, by configuring/updating that a second spatial parameter for the PDCCH (e.g., a reception beam) is aligned, the DL spatial parameter may be updated without separate signaling such as RRC reconfiguration or MAC CE message reception to change the TCI state for the initially RRC configured DL spatial parameter.

In addition, based on configuring/changing a first spatial parameter (e.g., spatial relation info) for PUCCH (or PUCCH group) through higher layer signaling (e.g., RRC/MAC CE), a second spatial parameter (e.g., TCI state) for a corresponding downlink channel (e.g., PDCCH/PDSCH) may be configured/changed together. For example, a predetermined indicator (e.g., 1-bit indicator field) may be added in MAC CE that configures/indicates the first spatial parameter for the uplink channel, and when the predetermined indicator indicates enable/activation (e.g., 'ON'), the second spatial parameter for the downlink channel (e.g., QCL (Type D) RS of the PDCCH) may be updated together with the same RS based on the first spatial parameter.

Embodiment 1-2

This embodiment relates to a method of assuming/changing an RS designated as spatial relation info of PUSCH to a QCL TypeD RS for PDCCH reception.

In this embodiment, in determining the PDCCH reception beam based on a reference RS corresponding to spatial relation info of the PUSCH resource, a specific operation may be defined according to the usage or contents of the PUSCH (e.g., the UCI type included in the PUSCH, or PUSCH in which user data is transmitted without UCI, etc.)

Case 1) For example, based on the beam corresponding to the SRI field in the uplink scheduling DCI (e.g., DCI format 0_1), the reception beam for the PDCCH including the DCI scheduling the PUSCH may be determined.

Case 2) As an additional example, for ACK/NACK piggyback PUSCH (i.e., when ACK/NACK transmission PUCCH timing and user data transmission PUSCH are scheduled at the same timing, if ACK/NACK is transmitted through PUSCH) a reception beam for a PDCCH including a DCI for scheduling the ACK/NACK piggyback PUSCH may be determined based on a transmission beam for the corresponding PUSCH.

Case 3) As an additional example, for CSI PUSCH, based on the CSI PUSCH transmission beam for semi-static/aperiodic (SP/AP) CSI reporting, a reception beam for PDCCH including DCI triggering/requesting the corresponding CSI reporting may be determined.

In relation to the above-described examples, an indication of the first spatial parameter for PUSCH (e.g., a transmission beam) may be included in an uplink grant DCI (e.g., DCI format 0_1) for PUSCH scheduling to a UE by a base station. 0_1). For example, the reference RS for the PUSCH transmission beam may be indicated through the SRI for the SRS resource. Here, the PUSCH may be transmitted in a codebook (CB)-based or non-CB-based scheme.

For Case 1, according to the CB-based scheme, uplink transmission (e.g., PUCCH/PUSCH transmission) may be performed based on at least one field in DCI. The at least one field may include an SRS resource indicator (SRI) indicating an SRS resource, a transmit precoding matrix indicator (TPMI) indicating the number of precoding matrices and layers, and a transmit rank indicator (TRI) indicating the number of transmission ranks. In addition, according to the non-CB based method, uplink transmission (e.g., PUCCH transmission) to the base station may be performed based on a transmission beam corresponding to spatial relation info corresponding to up to four 1-port SRS resources. The base station receiving such uplink transmission (e.g., PUCCH transmission) may select an appropriate uplink transmission beam and indicate at least one SRI to be applied to PUSCH transmission to the UE through the uplink grant DCI. Therefore, in the case of the non-CB based scheme, a corresponding beam of an SRI to be used for determining a PDCCH reception beam among a plurality of SRIs may be selected based on a specific scheme promised by the base station and the terminal or based on a specific SRI (e.g., the first or last SRI).

Accordingly, in the CB-based method or the non-CB-based method, it is possible to configure/update the PDCCH reception beam by using the spatial relation info of SRS resources, so RRC reconfiguration or MAC CE message reception is not required as well as Association flexibility may also be improved.

For Case 2, when ACK/NACK for a plurality of PDSCHs is transmitted through a PUSCH, a PDCCH reception beam may be configured according to a transmission beam indication for the corresponding PUSCH. For example, when the PUSCH may be scheduled by DCI format 0_0, or the SRI of DCI format 0_1, the terminal may determine a PDCCH reception beam based on a beam corresponding to a specific one of PUSCH resources configured in the activated BWP of the corresponding cell (e.g., the PUSCH resource having the lowest or highest ID).

For Case 3, a PDCCH reception beam using a PUSCH for semi-static/aperiodic (SP/AP) CSI reporting may be configured/updated. In the case of SP CSI reporting, a PDCCH beam may be determined, based on a beam corresponding to the spatial relation info of the most recent PUSCH resource transmitted until the SP CSI trigger state is activated and then deactivated through the CSI request field in DCI (e.g., DCI format 0_1). In the case of AP CSI reporting, a PDCCH beam may be aligned based on a beam of PUSCH performing CSI reporting that is triggered by DCI. Alternatively, similar to Case 3 of embodiment 1-1, not only the PDCCH but also the PDSCH reception beam scheduled by the corresponding PDCCH may be determined based on the RS designated as spatial relation info of the PUSCH transmission.

Embodiment 1-3

In this embodiment, a target (or range) to which the second spatial parameter for downlink reception determined based on the first spatial parameter for uplink transmission is assumed/applied will be described.

For example, according to the above-described embodiments, an application range that the terminal assume/change QCL (type D) RS for the PDCCH reception based on a (reference) RS associated with spatial relation info for an uplink channel (e.g., PUCCH / PUSCH) may be determined based on the following methods.

Method 1) PDCCH reception beam for a CORESET corresponding to each of the above-described cases
Method 2) PDCCH reception beam for entire CORESET configured for the terminal
Method 3) The terminal follows the method configured/indicated by the base station among Method 1 or Method 2

In applying embodiment 1-1 or embodiment 1-2, embodiment 1-3 includes methods of configuring a range for which CORESET(s) to apply the first spatial parameter (e.g., spatial relation info) for uplink transmission.

With respect to method 1, beam information for receiving a specific or dedicated PDCCH may be configured/updated through each spatial relation info based on a PUCCH/PUSCH usage (or contents). That is, the second spatial parameter (e.g., reception beam) for one specific/dedicated PDCCH CORESET may be configured/updated based on the first spatial parameter (or based on the linkage with the first spatial parameter). In this case, the TCI state configuration for the existing CORESETs may be maintained/applied to the remaining CORESET(s).

As a further example, only for a specific (e.g., UL scheduling DCI detected/monitored) SS or SS set, the second spatial parameter (e.g., QCL TypeD RS) for PDCCH reception may be configured/updated based on the first spatial parameter for uplink transmission (or based on the linkage with the first spatial parameter) according to the above embodiments. In this case, the TCI state configuration for the existing CORESET/SS/SS set may be maintained/applied to the remaining SS or SS set even for the same CORESET.

For example, when PUCCH is transmitted by triggering or scheduling DCI of the base station (e.g., ACK/NACK PUCCH by PDSCH scheduling DCI, CSI PUCCH transmission by CSI reporting triggering DCI), for the SS in which the DCI is received, the QCL TypeD RS for PDCCH reception may be assumed/changed based on a RS designated as corresponding PUCCH spatial relation info.

For method 2, each TCI state for the entire CORESET(s) configured for the terminal as well as the specific/dedicated PDCCH CORESET may be all configured/updated according to the second spatial parameter based on the first spatial parameter for uplink transmission. Here, a specific CORESET may not be included in the entire CORESET. The specific CORESET may correspond to CORESET 0, and CORESET 0 may be configured by a master information block (MIB) provided through the PBCH. The MIB may be obtained by the terminal from the network in the initial access phase, and in CORESET 0 configured by the MIB, the terminal may monitor the PDCCH including information for scheduling the system information block 1 (SIB1). After the terminal is connected, at least one CORESET may be further configured through RRC signaling. An identifier may be assigned to each of a plurality of CORESETs. That is, in method 2 the entire CORESET of method 2 may except for CORESET 0 which is a special physical resource region configured before RRC reception, the second spatial parameter for downlink reception may be configured/updated based on the first spatial parameter for uplink transmission for remaining CORESET(s) .

Method 3 is an example in which the base station has configurability for method 1 or method 2, and the base station may set/instruct the terminal in a direct manner which method of method 1 or method 2 the terminal applies.

For example, by defining a configuration parameter (e.g., 'PDCCH_beam_method') for a PDCCH spatial parameter in a higher layer (e.g., RRC) configuration, 'PDCCH_beam_method' may be configured to indicate the method 1 or the method 2. Alternatively, when the above-described 'PDCCH_beam_enabler, parameter is configured to ON, the method 1 or the method 2 may be indicated or activated through a new parameter 'PDCCH_beam_method, indicated through DCI.

The scope of the present disclosure is not limited by the name of the parameter such as 'PDCCH_beam_method' described above, and a parameter of any name indicating an application target for spatial parameter configuration for PDCCH/DCI reception may be applied.

Whether to apply the PDCCH reception beam configuration method/operation according to the above-described embodiments may be applied without separate signaling according to a pre-defined rule, a pre-configured method (e.g., configuring/indicating whether to apply with only RRC signaling), an update method through MAC CE (e.g., configuring candidate through RRC signaling and configuring/indicating at least one among the candidate through MAC CE), or dynamic indication through DCI (e.g., configuring candidate through RRC signaling and MAC CE and configuring/indicating at least one among the candidate through DCI). In this signaling, information about whether a second spatial parameter (e.g., QCL reference RS) for downlink reception (e.g., PDCCH reception) is configured/updated based on a first spatial parameter of any uplink channel among PUCCH and/or PUSCH may be included. Additionally or alternatively, this signaling may include activation information for each case of the above-described embodiments.

Embodiment 2

This embodiment relates to an additional method of assuming/changing/updating the second spatial parameter for the downlink channel based on the first spatial parameter for the uplink channel.

For example, the UE may assume/change/update a second spatial parameter (e.g., QCL (Type D) RS)) for reception of the PDSCH based on a RS designated as a first spatial parameter (e.g., spatial relation info) of an uplink channel (e.g., PUCCH/PUSCH).

For example, a QCL (Type D) RS for the PDSCH reception may be assumed/changed based on a RS designated as PUCCH spatial relation info according to embodiment 1-1. In addition, a QCL (Type D) RS for the PDSCH reception may be assumed/changed based on a RS designated as PUCCH spatial relation info according to embodiment 1-2.

In this case, a field indicating a TCI state for the PDSH in DL assignment DCI (e.g., DCI format 1_1) may be omitted.

Embodiment 2-1

According to this embodiment, when beam configuration/update is applied so that a UL channel (e.g., PUCCH/PUSCH) transmission beam and a PDSCH reception beam are aligned, it is possible to solve the ambiguity of whether the TCI field in PDSCH scheduling DCI (e.g., DCI format 1_1) is applied or not.

Specifically, when the hihger layer parameter tci-PresentInDCI value is configured to 'OFF', the second spatial parameter (e.g., QCL (Type D) RS) for PDSCH reception may be configured/assumed based on the first spatial parameter (e.g., spatial relation info) for uplink transmission (e.g., PUCCH/PUSCH transmission).

Even when the second spatial parameter for downlink reception is basically configured/assumed to be based on the first spatial parameter for uplink transmission, when the higher layer parameter tci-PresentInDCI value is 'ON' (that is, when the TCI field is included in the DCI), the PDSCH reception beam may be determined based on the TCI field of the DCI or based on the default TCI. For example, when the TCI field is included in DCI, when the scheduling offset from the PDCCH reception timing to the PDSCH reception timing is after a predetermined threshold, the PDSCH reception beam may be determined by the TCI field in the DCI, and the scheduling offset is less than the predetermined threshold, the PDSCH reception beam may be determined based on the default TCI state. The default TCI may mean QCL information to be applied when the terminal performs buffering until the terminal completes decoding of the beam indication with DCI. For example, the default TCI state may correspond to the TCI state associated with the CORESET or SS set having the lowest identifier in the latest slot monitored by the terminal. Specifically, the default TCI state corresponds to QCL information applied when the terminal performs buffering before completing DCI decoding, and a TCI state applied to 'the CORESET associated a monitored search space with the lowest CORESET-ID in the latest slot in which one or more CORESETs within the active BWP of the serving cell'.

Whether to apply the PDSCH reception beam configuration method/operation according to the above-described embodiments may be applied without separate signaling according to a pre-defined rule, a pre-configured method (e.g., configuring/indicating whether to apply with only RRC signaling), an update method through MAC CE (e.g., configuring candidate through RRC signaling and configuring/indicating at least one among the candidate through MAC CE), or dynamic indication through DCI (e.g., configuring candidate through RRC signaling and MAC CE and configuring/indicating at least one among the candidate through DCI). In this signaling, information about whether a second spatial parameter (e.g., QCL reference RS) for downlink reception (e.g., PDCCH reception) is configured/updated based on a first spatial parameter of any uplink channel among PUCCH and/or PUSCH may be included. Additionally or alternatively, this signaling may include activation information for each case of the above-described embodiments.

Embodiment 3

This embodiment is about a method of transmitting information (e.g., UE capability information) on whether the terminal configures/assumes a second spatial parameter for downlink reception based on a first spatial parameter for uplink transmission to the base station.

Determining a second spatial parameter for a downlink channel (e.g., PDCCH) based on a TCI state configured for CORESET associated with PDCCH, determining a second spatial parameter for a downlink channel (e.g., PDSCH) based on a TCI state indicated by the PDCCH/DCI or based on a TCI state configured for the CORESET associated with the PDCCH/DCI, or applying the default TCI state to the PDCCH/PDSCH may be referred to as the first operation. Alternatively, an operation of changing/updating/assuming a second spatial parameter (e.g., a reception beam) for the DL channel (e.g., PDCCH/PDSCH) based on the first spatial parameter (e.g., transmit beam) for the UL channel (e.g.,

PUCCH/PUSCH) may be referred to as a second operation.

If the second operation is relatively better than the first operation in terms of performance or latency, etc., the terminal may report an indicator allowing the application of the second operation or a change to the second operation to the base station. Accordingly, since the second spatial parameter for downlink reception may be changed/updated/assumed based on the first spatial parameter for uplink transmission, the downlink reception beam may be applied more flexibly.

For example, when a predetermined indicator (e.g., enabler parameter) indicating whether to apply the second operation is configured to 'ON', the corresponding 1-bit indicator information is activated and included in the UCI parameter or the RRC parameter and may be reported to the base station.

In this way, when the terminal reports to the base station that the second operation can be applied and configures the base station so that the terminal determines the downlink reception beam according to the second operation, the terminal may determine a reception beam for downlink reception (e.g., PDCCH/PDSCH reception) may be determined based on a transmission beam for uplink transmission (e.g., PUCCH/PUSCH transmission).

For example, a linkage between the SR PUCCH transmission beam and the reception beam for the uplink scheduling PDCCH may be configured. In addition, a linkage may be configured between the SR PUCCH transmission beam and the reception beam for the uplink scheduling PDCCH, and furthermore, the reception beam of the PDSCH scheduled by the corresponding PDCCH. Accordingly, based on the PUCCH transmission beam, the PDCCH reception beam and/or the PUSCH transmission beam may be determined/updated/assumed. As an additional example, the linkage between the reception beam for the downlink scheduling PDCCH, the reception beam of the PDSCH scheduled by the corresponding PDCCH, and the PUCCH/PUSCH transmission beam carrying ACK/NACK for the corresponding PDSCH may be configured. In addition, a linkage may be configured between a reception beam of a PDCCH triggering a CSI reporting and a PUCCH/PUSCH transmission beam carrying a corresponding CSI reporting.

In addition, the application range of the second spatial parameter for downlink reception based on the first spatial parameter for uplink transmission may be determined implicitly, per channel, per channel content, or determined based on a specific application range. For example, when the second operation is enabled/activated, the SR PUCCH transmission beam may be applied to the reception beam of the uplink scheduling PDCCH, but may not be applied to the PDSCH reception beam. Alternatively, the transmission beam for the PUCCH carrying the CSI reporting may be applied to both the PDCCH reception beam and the PDSCH reception beam.

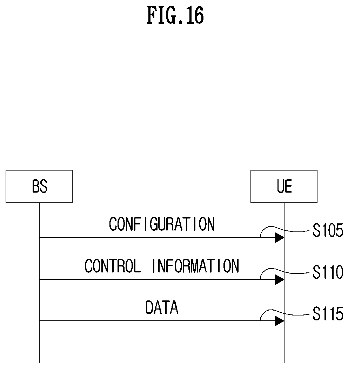

FIG. 16 is a diagram for explaining a signaling process according to an embodiment of the present disclosure.

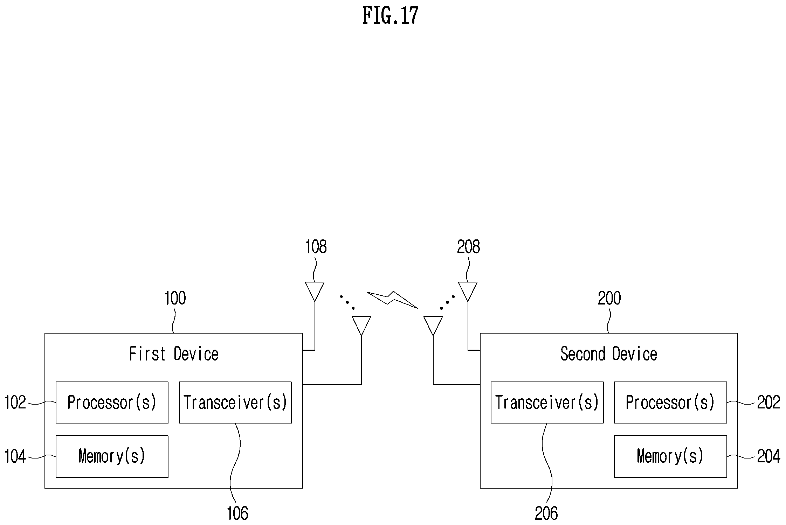

An example of the signaling operation of the base station and the terminal for the above-described embodiments may be as shown in FIG. 16. Here, the terminal/base station is just an example, and it may be substituted for various devices as described in FIG. 17. The base station may correspond to one base station including a plurality of TRPs or one cell including a plurality of TRPs. FIG. 16 is for convenience of description, and does not limit the scope of the present disclosure. Also, some of the steps described in FIG. 16 may be merged or omitted. In addition, in performing the procedures described below, the above-described downlink transmission/reception operation or uplink transmission/reception operation or beam management operation may be applied, but the scope of the present disclosure is not limited thereto, and various downlink reception or uplink transmission operations can be applied.

The UE may receive configuration information (Configuration) from the base station (S105). The Configuration may include system information (SI), scheduling information, beam management (BM) related settings (e.g., DL BM related CSI-ResourceConfig IE, NZP CSI-RS resource set IE, etc.), the configuration of the base station (e.g., TRP configuration) information and the like. For example, the Configuration includes information related to reconfiguration/update of RS information for spatial-related (e.g., QCL-related) assumption (e.g., information related to whether reconfiguration/update is performed, performing method, timing, etc.). The configuration may be transmitted through higher layer (e.g., RRC or MAC CE) signaling. In addition, when the configuration is predefined or preconfigured, the corresponding step may be omitted.

For example, based on the above-described embodiments, the Configuration may include information on at least one of TCI state(s), QCL RS(s), or DMRS port(s). For example, the TCI state may include RS information for assuming a spatial relation (e.g., QCL relation). For example, the Configuration may include QCL-related configuration information for a DL channel (e.g., PDCCH/PDSCH) and/or a UL channel (e.g., PUSCH/PUCCH). For example, the configuration may include information indicating change/update of QCL-related information (e.g., RS information for spatial relation assumption, etc.) of a downlink channel (e.g., PDCCH/PDSCH).

For example, the operation of receiving the Configuration, by the UE (100/200 in FIG. 17), from the base station (200/100 in FIG. 17) in the above-described step S105 may be implemented by the apparatus of FIG. 17 to be described below. For example, referring to FIG. 17, one or more processors 102 may control one or more transceivers 106 and/or one or more memories 104, etc. to receive the Configuration, and one or more transceivers 106 may receive the configuration from the base station.

The UE may receive control information from the base station (S110). The control information may be received through a control channel (e.g., PDCCH). For example, the control information may be DCI/UCI. For example, the control information may include scheduling information for a downlink data channel (e.g., PDSCH) and/or an uplink channel (e.g., PUCCH/PUSCH) and the like. For example, based on the above-described embodiments, the control information may include information on at least one of TCI state(s), QCL RS(s), or DMRS port(s). For example, one or more TCI states may be indicated for DMRS port(s) related to a DL data channel (e.g., PDSCH)/UL channel (e.g., PUCCH/PUSCH) by the TCI state field in the control information (e.g., DCI). For example, the TCI state may include RS information for spatial relation (e.g., QCL relation) assumption.

For example, the operation of receiving the control information, by the UE (100/200 in FIG. 17), from the base station (200/100 in FIG. 17) in the above-described step S110 may be implemented by the apparatus of FIG. 17 to be described below. For example, referring to FIG. 17, one or more processors 102 may control one or more transceivers 106 and/or one or more memories 104, etc. to receive the control information, and one or more transceivers 106 may receive the control information from the base station.

The UE may receive data from the base station (S115). The data may be received through a downlink channel (e.g., PDCCH/PDSCH). For example, the data may be scheduled based on the control information. In addition, the data may be received based on the information configured/indicated in steps S105/S110. For example, based on the information configured/indicated in steps S105/S110, the UE may perform channel estimation/compensation and may receive the data. For example, based on the above-described embodiments, a spatial relation-related RS (e.g., QCL type D RS) for receiving the data may be configured. For example, based on spatial relation information of an uplink channel (e.g., PUCCH/PUSCH) transmitted by the UE, a spatial relation-related RS (e.g., QCL type D) for receiving the data (downlink channel) RS) may be configured/changed. For example, based on the usage/contents (e.g., SR, HARQ-ACK/NACK, CSI, etc.) of the uplink channel, a spatial relation-related RS (e.g., QCL type D RS) (of the downlink channel) for receiving the data may be configured. For example, the spatial relation-related RS (e.g., QCL type D RS) for data reception (downlink channel) may be configured/updated/changed for each CORESET/SS/SS set. For example, whether to apply the QCL RS indicated in the TCI field or to follow spatial relation information of an uplink channel may be determined based on the inclusion/existence of the TCI field in DCI.

For example, the operation of receiving the data, by the UE (100/200 in FIG. 17), from the base station (200/100 in FIG. 17) in the above-described step S115 may be implemented by the apparatus of FIG. 17 to be described below. For example, referring to FIG. 17, one or more processors 102 may control one or more transceivers 106 and/or one or more memories 104, etc. to receive the data, and one or more transceivers 106 may receive the data from the base station.

Although not illustrated in FIG. 16, the UE may report to the base station whether to apply an operation of changing/updating the QCL reference RS of the DL channel (e.g., PDCCH/PDSCH) based on the transmit beam (or QCL relation RS) for the UL channel.

As mentioned above, the above-described base station/UE signaling and operation (e.g., embodiment 1, embodiment 2, FIGS. 15, 16, etc.) can be implemented by the apparatus of FIG. 17 to be described below. For example, the base station may correspond to the first wireless device, the UE may correspond to the second wireless device, and vice versa may be considered in some cases.

For example, the base station/UE signaling and operation (e.g., embodiment 1, embodiment 2, FIGS. 15, 16, etc.) described above may be processed by one or more processors (e.g., 102, 202) of FIG. 17, and the above-described base station/UE signaling and operation (e.g., embodiment 1, embodiment 2, FIG. 15, FIG. 16, etc.) may be stored in a memory (e.g., one or more memories 104 and 204 of FIG. 17) in the form of an instruction/program (e.g., instruction, executable code) for driving at least one processor of FIG. 17 (e.g., 102 and 202).

General Device to which the Present Disclosure may be applied

FIG. 17 illustrates a block diagram of a wireless communication device according to an embodiment of the present disclosure.

In reference to FIG. 17, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing downlink reception by a user equipment (UE) in a wireless communication system, the method comprising:

    receiving, from a base station, at least one of downlink control information (DCI) or configuration information including a first spatial parameter for uplink transmission; and
    receiving, from the base station, a downlink channel based on a second spatial parameter based on the first spatial parameter,
    wherein, based on that the downlink channel is a physical downlink control channel (PDCCH), the second spatial parameter based on the first spatial parameter is applied for at least one specific control resource set (CORESET) among at least one CORESET configured for the UE.

2. The method of claim 1,
    wherein the at least one specific CORESET corresponds to at least one CORESET in which the PDCCH is monitored.

3. The method of claim 1,

    wherein the at least one specific CORESET is entire CORESET configured by a higher layer for the UE, and
    wherein the entire CORESET is at least one CORESET configured for the UE other than CORESET 0.

4. The method of claim 1,
    wherein information indicating at least one of whether to enable or whether to activate to application of the second spatial parameter based on the first spatial parameter is provided.

5. The method of claim 4,
    wherein, based on that the application of the second spatial parameter based on the first spatial parameter is disabled or deactivated, a spatial parameter configured by a higher layer for a CORESET in which the PDCCH is monitored is applied.

6. The method of claim 1,
    wherein, based on that the downlink channel is a physical downlink shared channel (PDSCH) and a spatial parameter for the PDSCH is not included in DCI scheduling the PDSCH, the PDSCH is received based on the second spatial parameter based on the first spatial parameter.

7. The method of claim 1,
    wherein, based on that the first spatial parameter is configured for a PUCCH resource including scheduling request (SR), the second spatial parameter based on the first spatial parameter is applied to a reception of PDCCH including uplink scheduling DCI.

8. The method of claim 1,
    wherein, based on that the first spatial parameter is configured for a PUCCH resource including hybrid automatic repeat request (HARQ) ACK/NACK, the second spatial parameter based on the first spatial parameter is applied to a reception of PDCCH including downlink scheduling DCI.

9. The method of claim 1,
    wherein, based on that the first spatial parameter is configured for a PUCCH including a periodic or semi-persistent channel state information (CSI) reporting, the second spatial parameter based on the first spatial parameter is applied to a reception of the PDCCH and a PDSCH scheduled by the PDCCH.

10. The method of claim 1,

**EP 4 123 918 A1**

wherein, based on that the first spatial parameter is indicated through uplink scheduling or triggering DCI, the second spatial parameter based on the first spatial parameter is applied to a reception of PDCCH including uplink scheduling DCI, and

wherein the uplink scheduling or triggering DCI is associated with at least one of a PUSCH, a PUSCH including HARQ ACK/NACK, or a PUSCH including a semi-persistent or aperiodic CSI reporting.

**11.** The method of claim 1,

wherein the first spatial parameter includes information on a first quasi-colocation (QCL)-related reference signal (RS) for uplink transmission, and

wherein the second spatial parameter includes information on a second QCL RS corresponding to a first QCL RS.

**12.** The method of claim 1,
wherein capability information of the UE for whether to apply the second spatial parameter based on the first spatial parameter for the reception of the downlink channel.

**13.** The method of claim 1,
wherein at least one of a physical uplink control channel (PUCCH) or a physical uplink shared channel (PUSCH) is transmitted to the base station based on the first spatial parameter.

**14.** The method of claim 1,
wherein the first spatial parameter and the second spatial parameter are integrally configured, or a linkage between the first spatial parameter and the second spatial parameter is configured.

**15.** A user equipment (UE) for performing downlink reception or uplink transmission in a wireless communication system, the UE comprising:

at least one transceiver; and
at least one processor coupled with the at least one transceiver,
wherein the at least one processor is configured to:

receive, from a base station through the at least one transceiver, at least one of downlink control information (DCI) or configuration information including a first spatial parameter for uplink transmission; and
receive, from the base station through the at least one transceiver, a downlink channel based on a second spatial parameter based on the first spatial parameter,

wherein, based on that the downlink channel is a physical downlink control channel (PDCCH), the second spatial parameter based on the first spatial parameter is applied for at least one specific CORESET among at least one CORESET configured for the UE.

**16.** A method for performing downlink transmission or uplink reception by a base station (BS) in a wireless communication system, the method comprising:

transmitting, to a user equipment (UE), at least one of downlink control information (DCI) or configuration information including a first spatial parameter for uplink transmission; and
transmitting, to the UE, a downlink channel based on a second spatial parameter based on the first spatial parameter,
wherein, based on that the downlink channel is a physical downlink control channel (PDCCH), the second spatial parameter based on the first spatial parameter is applied for at least one specific CORESET among at least one CORESET configured for the UE.

**17.** A base station (BS) for performing downlink transmission or uplink reception in a wireless communication system, the BS comprising:

at least one transceiver; and
at least one processor coupled with the at least one transceiver,
wherein the at least one processor is configured to:

34

transmit, to a user equipment (UE) through the at least one transceiver, at least one of downlink control information (DCI) or configuration information including a first spatial parameter for uplink transmission; and transmit, to the UE through the at least one transceiver, a downlink channel based on a second spatial parameter based on the first spatial parameter,

wherein, based on that the downlink channel is a physical downlink control channel (PDCCH), the second spatial parameter based on the first spatial parameter is applied for at least one specific CORESET among at least one CORESET configured for the UE.

18. A processing apparatus configured to control a user equipment (UE) to perform downlink reception or uplink transmission in a wireless communication system, the processing apparatus comprising:

at least one processor; and
at least one computer memory operably connected to the at least one processor and storing instructions that, based on being executed by the at least one processor, perform operations comprising:

receiving, from a base station, at least one of downlink control information (DCI) or configuration information including a first spatial parameter for uplink transmission; and
receiving, from the base station, a downlink channel based on a second spatial parameter based on the first spatial parameter,

wherein, based on that the downlink channel is a physical downlink control channel (PDCCH), the second spatial parameter based on the first spatial parameter is applied for at least one specific CORESET among at least one CORESET configured for the UE.

19. At least one non-transitory computer-readable medium storing at least one instruction,
wherein the at least one instruction executable by at least one processor controls a device performing downlink reception or uplink transmission in a wireless communication system to:

receive, from a base station, at least one of downlink control information (DCI) or configuration information including a first spatial parameter for uplink transmission; and
receive, from the base station, a downlink channel based on a second spatial parameter based on the first spatial parameter,
wherein, based on that the downlink channel is a physical downlink control channel (PDCCH), the second spatial parameter based on the first spatial parameter is applied for at least one specific CORESET among at least one CORESET configured for the UE.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

# FIG.5

Resource grid

A carrier
(up to 3300 subcarriers,i.e.,275 RBs)

A BWP

1 RB=12 subcarrier

1 RE

1 subcarrier

1 Symbol

l=0 ·····

k=0

FIG.6

FIG.7

# FIG.8

TERMINAL                                          BASE STATION

CSI-Resourceconfig IE          S410
(CSI-SSB-ResourceSetList)

S420
SSB resource

S430
Beam Reporting (best SSBRI and L1-RSRP)

FIG.9

Repetition
"on"

(a)

Repetition
"off"

Resource #0
Resource #0
Resource #0

CRI feedback

(b)

FIG.10

TERMINAL                                          BASE STATION

                                                      S610
                    NZP CSI-RS resource set IE

              Receiving CSI-RS resource(s) configured  S620
              with Repetition 'ON' through same Tx beam

S630 —  Determine Rx beam

                                                      S640
                    Omit CSI report (No report)

FIG.11

TERMINAL                                          BASE STATION

                                                        S710
                    NZP CSI-RS resource set IE

        Receiving CSI resource(s) configured with
        Repetition 'OFF' through diffrerent Tx beams

                                                        S720

S730——| Determine best beam |                          S470

                    CSI report (CRI/L1-RSRP)

# FIG.12

FIG.13

Base station Rx beam sweeping

SRS#0 RX  SRS#1 RX  SRS#N RX . . .

SRS #0,1...N

Terminal Tx beam (fixed)

(a)

Base station Rx beam fixed

SRS#0  SRS#1

Terminal Tx beam sweeping

(b)

FIG.14

TERMINAL                                          BASE STATION

SRS Config. IE                      S1010
(usage-BM, SRS-SpatialRelation Info)

S1020 ── | Determine Tx beam for
         | SRS resource

                                                  S1030
Transmitting SRS through determined Tx beam

                                                  S1040
feedback

# FIG.15

```
                    ( START )
                        │
                        ▼
      ┌──────────────────────────────────┐
      │  RECEIVING FIRST SPATIAL PARAMETER │ ──── S1510
      │      FOR UPLINK TRANSMISSION       │
      └──────────────────────────────────┘
                        │
                        ▼
      ┌──────────────────────────────────┐
      │    PERFORMING DOWNLINK RECEPTION   │
      │  BASED ON SECOND SPATIAL PARAMETER │ ──── S1520
      │   BASED ON FIRST SPATIAL PARAMETER │
      └──────────────────────────────────┘
                        │
                        ▼
                    (  END  )
```

FIG.16

FIG.17

## INTERNATIONAL SEARCH REPORT

| | International application No. |
|---|---|
| | **PCT/KR2021/003333** |

**A. CLASSIFICATION OF SUBJECT MATTER**

**H04B 7/08**(2006.01)i; **H04B 7/0408**(2017.01)i; **H04B 7/06**(2006.01)i; **H04W 72/04**(2009.01)i; **H04W 72/12**(2009.01)i

According to International Patent Classification (IPC) or to both national classification and IPC

**B. FIELDS SEARCHED**

Minimum documentation searched (classification system followed by classification symbols)

H04B 7/08(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간 파라미터(spatial parameter), 하향링크 제어 정보(downlink control information), 제어자원세트(control resource set), 상향링크(uplink)

**C. DOCUMENTS CONSIDERED TO BE RELEVANT**

| Category* | Citation of document, with indication, where appropriate, of the relevant passages | Relevant to claim No. |
|---|---|---|
| Y | FRAUNHOFER IIS et al. Enhancements on UE multi-beam operation. R1-1910432, 3GPP TSG RAN WG1 #98. Chongqing, China. 04 October 2019.<br>See section 3. | 1-19 |
| Y | ZTE. Details of latency and overhead reduction for beam management. R1-1906245, 3GPP TSG RAN WG 1 #97. Reno, USA. 04 May 2019.<br>See sections 2.1.3 and 2.2.1; and figure 1. | 1-19 |
| Y | NTT DOCOMO, INC. Discussion on multi-beam enhancement. R1-1911185, 3GPP TSG RAN WG1 #98 bis. Chongqing, China. 04 October 2019.<br>See pages 5 and 8. | 4-5,12 |
| A | US 2020-0077395 A1 (SAMSUNG ELECTRONICS CO., LTD.) 05 March 2020 (2020-03-05)<br>See paragraphs [0117]-[0186]; and figure 12. | 1-19 |
| A | US 2019-0342907 A1 (ASUSTEK COMPUTER INC.) 07 November 2019 (2019-11-07)<br>See paragraphs [0526]-[0550]; and figures 5-8. | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 July 2021** | **02 July 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div align="center">

**INTERNATIONAL SEARCH REPORT**
**Information on patent family members**

</div>

| International application No. |
| --- |
| **PCT/KR2021/003333** |

| Patent document cited in search report | | | Publication date (day/month/year) | Patent family member(s) | | | Publication date (day/month/year) |
| --- | --- | --- | --- | --- | --- | --- | --- |
| US | 2020-0077395 | A1 | 05 March 2020 | CN | 110663282 | A | 07 January 2020 |
| | | | | EP | 3628134 | A1 | 01 April 2020 |
| | | | | EP | 3628134 | A4 | 22 April 2020 |
| | | | | KR | 10-2020-0003935 | A | 10 January 2020 |
| | | | | US | 10506587 | B2 | 10 December 2019 |
| | | | | US | 2018-0343653 | A1 | 29 November 2018 |
| | | | | WO | 2018-217063 | A1 | 29 November 2018 |
| US | 2019-0342907 | A1 | 07 November 2019 | CN | 110446269 | A | 12 November 2019 |
| | | | | EP | 3565172 | A1 | 06 November 2019 |
| | | | | EP | 3565172 | B1 | 25 November 2020 |
| | | | | JP | 2019-195167 | A | 07 November 2019 |
| | | | | JP | 6756001 | B2 | 16 September 2020 |
| | | | | KR | 10-2019-0127557 | A | 13 November 2019 |
| | | | | KR | 10-2206806 | B1 | 25 January 2021 |
| | | | | TW | 201947965 | A | 16 December 2019 |

Form PCT/ISA/210 (patent family annex) (July 2019)